# EUROPÄISCHE PATENTANMELDUNG

(11) **EP 3 431 727 A1**
(43) Veröffentlichungstag der Anmeldung: **23.01.2019**
(21) Anmeldenummer: 18180264.6
(22) Anmeldetag: 28.06.2018
(51) Int. Cl.: F01N 3/08, F01N 3/10, F01N 3/20, F01N 9/00, F01N 13/00, F02B 37/16, F02D 41/00, F02M 26/06

(54) **BRENNKRAFTMASCHINE MIT EINEM ABGASTURBOLADER**

(30) Priorität: 19.07.2017 DE 102017212308
(71) Anmelder: Bayerische Motoren Werke Aktiengesellschaft, 80809 München (DE)
(72) Erfinder: Bruene, Hans-Juergen, 3350 Haag (AT); Weiss, Gerhard, 4407 Gleink (AT)

(57) **Zusammenfassung**

Brennkraftmaschine mit einem Abgasturbolader mit einer Turbine und einem Verdichter, wobei die Turbine in einem Abgasstrang und der Verdichter in einem Frischluftstrang angeordnet ist, wobei in dem Abgasstrang nach der Turbine zumindest eine Abgasreinigungsvorrichtung angeordnet ist, wobei der Abgasstrang in Strömungsrichtung eines Abgases nach der Turbine und vor einer ersten Abgasreinigungsvorrichtung von einem Verschlusselement verschließbar ist und der Abgasstrang vor dem Verschlusselement mit dem Frischluftstrang in Strömungsrichtung einer Frischluft vor dem Verdichter über einen Bypass Gasführend verbindbar ist.

Durch die erfindungsgemäße Ausgestaltung wird in einer Schubphase eines Kraftfahrzeuges mit der Brennkraftmaschine die Abgasreinigungsvorrichtung vor einer schnellen Abkühlung geschützt und deren Reinigungswirkung aufrechterhalten.

## Beschreibung

Die Erfindung betrifft eine Brennkraftmaschine mit einem Abgasturbolader mit den Merkmalen aus dem Oberbegriff des Patentanspruchs 1.

Zum technischen Umfeld wird beispielsweise auf die Deutsche Offenlegungsschrift DE 2 207 221 A1 hingewiesen. Aus dieser ist eine Brennkraftmaschine mit einer Abgasturbine und einer von dieser angetriebenem Ladergebläse bekannt, das Verbrennungsluft in eine Ladeluftleitung der Brennkraftmaschine fördert, wobei die Ladeluftleitung eine das Ladergebläse und die Abgasturbine unter Umgehung der Brennkraftmaschine verbindende Umluftleitung aufweist, in der ein von dem Leistungsregelorgan der Brennkraftmaschine gesteuertes Regelorgan angeordnet ist.

Mit dieser Ausgestaltung wird ein rascher Drehzahlabfall des Turboladers beim Schließen der Brennkraftmaschinen-Drosselklappe unterbunden und das Beschleunigungsverhalten der Brennkraftmaschine beispielsweise nach einer Schubphase deutlich verbessert.

Nachteilig an dieser bekannten Anordnung ist, dass sie nur für Brennkraftmaschinen mit Benzinbetrieb, d. h. mit einer Drosselklappe, einsetzbar ist. Darüber hinaus wird vorgeschlagen vor oder hinter der Abgasturbine ein oder mehrere Katalysatoren anzuordnen. Dies hat den großen Nachteil, dass die Katalysatoren vor der Turbine während einer Schubphase mit kalter Luft durchströmt werden und die Temperatur der Katalysatoren unter ihre Konvertierungstemperatur fallen können, wodurch sich die Abgasemission deutlich verschlechtern, bzw. gar keine Abgasreinigung mehr stattfindet, wenn die Brennkraftmaschine wieder in Betrieb ist.

Stetig abnehmende Abgastemperaturen moderner Dieselmotoren bringen eine katalytische Reduzierung der im Abgas enthaltenen und vom Gesetzgeber limitierten Schadstoffe zum Erliegen. Unter allen Betriebszuständen einer Brennkraftmaschine ist der Schubbetrieb (extern angetriebene Brennkraftmaschine ohne jegliche Kraftstoffeinspritzung, z. B. Bergabfahrt eines Kraftfahrzeuges) diesbezüglich der kritischste Betrieb, da nur kalte Ansaugluft durch die Brennkraftmaschine gefördert wird und kein Kraftstoff für die Aufheizung des Abgases, bzw. der Katalysatoren auf deren Betriebstemperatur zur Verfügung steht.

In längeren Schubphasen kühlen somit alle abgasführenden Bauteile sehr schnell sehr stark ab. Unterhalb einer Grenztemperatur (sogenannte Light-Off-Temperatur) bricht die katalytische Wirksamkeit der Katalysatoren zusammen und die im Abgas enthaltenen Emissionen können nicht mehr katalytisch reduziert werden. Um dem entgegen zu wirken, sind Heizmaßnahmen erforderlich. Üblicherweise werden dazu Sonderbetriebsarten mit Maßnahmen wie Androsseln, Nacheinspritzung usw. eingesetzt. Allen Heizmaßahmen ist gemein, dass die Brennkraftmaschine absichtlich mit verschlechtertem Wirkungsgrad betrieben wird, um die Abgastemperatur anzuheben. Diese Vorgehensweise hat negative Auswirkungen auf den Kraftstoffverbrauch und die CO₂-Bilanz.

Aufgabe der vorliegenden Erfindung ist es, eine Maßnahme aufzuzeigen, wie das Abkühlen der Katalysatoren in einem Schubbetrieb der Brennkraftmaschine für ein Kraftfahrzeug verringert werden kann.

Diese Aufgabe wird durch die Merkmale im kennzeichnenden Teil des Patentanspruchs 1 gelöst.

Als Abhilfe wird erfindungsgemäß ein Schub-Umluft-System vorgeschlagen, das im Schubbetrieb der Brennkraftmaschine aktiviert wird. Wesentlich dabei ist, dass das Abgas (im Wesentlichen relativ kalte Luft) im Schubbetrieb über den oder die Abgasturbolader, wenn die Brennkraftmaschine über mehr als einen Turbolader verfügt, aber auf gar keinen Fall über die katalytisch beschichteten Bauteile geführt wird. Aus diesem Grund muss der Abzweigpunkt für die Umluftleitung nach dem/den Abgasturboladern, aber unbedingt vor den katalytischen Bauteilen sein. Im Falle einer aufgeladenen Dieselbrennkraftmaschine wird beispielsweise stromabwärts des letzten Abgasturboladers aber unbedingt stromaufwärts des ersten Katalysators, beispielsweise eine Klappe angebracht. Diese Klappe ist im Normalbetrieb geöffnet und behindert den Abgasstrom nicht. Im Schubbetrieb der Brennkraftmaschine wird die Klappe geschlossen und der Abgasstrom über den Bypass weiter in Richtung Verdichter geleitet und vor dem Verdichter dem Frischluftstrom zugemischt. Für eine korrekte Funktion ist ggf. eine Stauklappe bzw. ein Ventil im Bypass anzuordnen.

Durch die vorliegende Erfindung werden alle abgasführenden, katalytisch beschichteten Bauteile nach dem oder den Abgasturboladern in Schubphasen der Brennkraftmaschine nicht mehr abgekühlt. Damit bleiben sie in vorteilhafter Weise auf Betriebstemperatur und können bestimmungsgemäß alle Schadstoffe nach einer Wiederinbetriebnahme der Brennkraftmaschine katalytisch umsetzen. Die heute erforderlichen Heizmaßnahmen können deutlich reduziert werden oder entfallen und die CO₂-Bilanz wird deutlich verbessert.

Vorteilhafte Weiterbildungen der Erfindung sind in den Unteransprüchen beschrieben.

Wie bereits erwähnt, ist in dem Bypass gemäß Patentanspruch 2 bevorzugt ein Ventil angeordnet.

In einer bevorzugten Ausführungsform ist die erste Abgasreinigungsvorrichtung gemäß Patenanspruch 3 ein Oxidationskatalysator oder ein Stickoxidspeicherkatalysator.

In einer Weiterbildung der Erfindung ist stromab der ersten Abgasreinigungsvorrichtung gemäß Patentanspruch 4 eine zweite Abgasreinigungsvorrichtung in dem Abgasstrang angeordnet. Dieser ist gemäß Patentanspruch 5 bevorzugt ein SCR-Katalysator (Selective-Catalytic-Reduction).

Stromab der zweiten Abgasreinigungsvorrichtung ist in einer Weiterbildung der Erfindung gemäß Patentanspruch 6 eine dritte Abgasreinigungsvorrichtung in dem Abgasstrang angeordnet, bei der es sich bevorzugt um einen weiteren SCR-Katalysator und/oder einen Schlupfkatalysator handelt. Mit dem Schlupfkatalysator kann in vorteilhafter Weise ein Reduktionsmittel, wie beispielsweise AdBlue ®, welches stromauf der zweiten Abgasreinigungsvorrichtung mittels einer Eindüsvorrichtung gemäß Patentanspruch 8 in den Abgasstrang eingebracht wird, vollständig aus dem Abgas entfernt werden.

Für eine Homogenisierung, bzw. gute Vermischung des Reduktionsmittels mit dem Abgas ist zwischen der Eindüsvorrichtung 13 und der zweiten Abgasreinigungsvorrichtung gemäß Patentanspruch 9 ein Reduktionsmittelmischer in dem Abgasstrang angeordnet.

Im Folgenden ist die Erfindung anhand einer einzigen Figur näher erläutert.

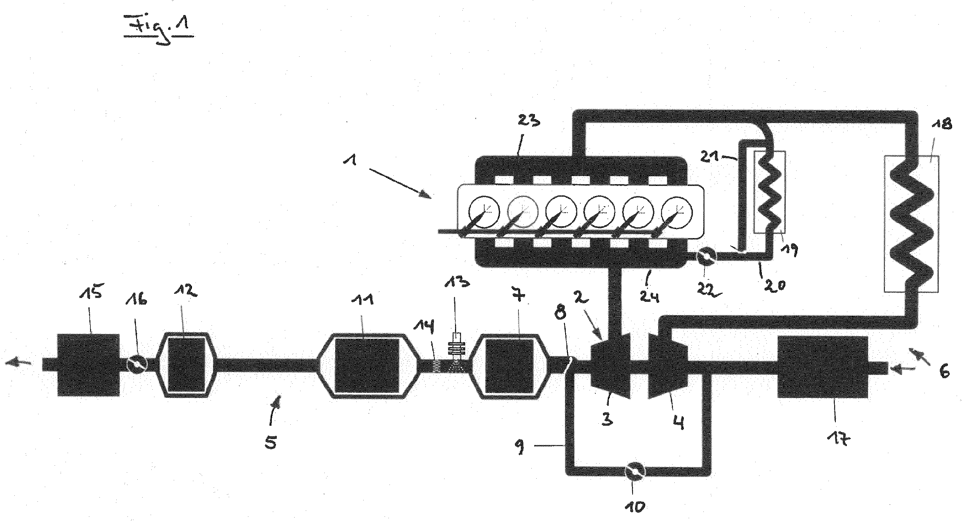

- Figur 1: zeigt schematisch einen Aufbau einer erfindungsgemäßen Brennkraftmaschine.

Figur 1 zeigt schematisch einen Aufbau einer erfindungsgemäßen Brennkraftmaschine 1. Die Brennkraftmaschine 1 weist im vorliegenden Ausführungsbeispiel sechs nicht bezifferte Zylinder auf, die durch Kreise dargestellt sind und für jeden Zylinder einen ebenfalls nicht bezifferten Injektor zum Einspritzen von Kraftstoff in die Zylinder. Die Brennkraftmaschine 1 erhält eine Frischluft durch einen Frischluftstrang 6, wobei die Frischluft zuerst durch eine Ansaugluftaufbereitung 17 (Luftfilter, Ansauggeräuschdämpfer, etc.) strömt und anschließend durch einen Verdichter 4 eines Abgasturboladers 2. Ein Einströmen der Frischluft in den Frischluftstrang 6 ist mit einem Pfeil dargestellt. Der Verdichter 4 ist im Frischluftstrang 6 angeordnet und eine Turbine 3 des Abgasturboladers 2 in einem Abgasstrang 5. Nach dem Verdichter 4 strömt die Frischluft weiter durch einen Ladeluftkühler 18 in einen Luftsammler 23, von dem aus die Frischluft auf die sechs Zylinder aufgeteilt wird.

Abgase der Brennkraftmaschine 1, die bei der Verbrennung entstehen, werden durch einem Abgaskrümmer 24 geleitet und strömen dann weiter durch den Abgasstrang 5 und durch in die Turbine 3 des Abgasturboladers 2. Weiter durchströmt das Abgas nach der Turbine 3 eine erste Abgasreinigungsvorrichtung 7 und eine zweite Abgasreinigungsvorrichtung 11 und eine dritte Abgasreinigungsvorrichtung 12, passiert dann eine Abgasstauklappe 16 und verlässt nach einem Schalldämpfer 15 die Abgasanlage 5. Ein Austreten des Abgases ist durch einen Pfeil dargestellt.

Weiter weist die Brennkraftmaschine in dem vorliegenden Ausführungsbeispiel eine Hochdruck-Abgasrückführung (HD-AGR) auf. Diese verbindet den Abgaskrümmer 24 mit dem Frischluftstrang 6 zwischen dem Ladeluftkühler 18 und dem Luftsammler 23. Die HD-AGR besteht aus einer Abgasrückführvorrichtung 20, in der ein Abgasrückführkühler 19 angeordnet ist, der von einem AGR-Bypass 21 umgehbar ist. Zur Mengenregelung des rückgeführten Abgases ist in der Abgasrückführvorrichtung 20 abgaskrümmerseitig ein Abgasrückführventil 22 vorgesehen.

Die erste Abgasreinigungsvorrichtung 7 ist bevorzugt ein Oxidationskatalysator (DOC) oder ein Stickoxidspeicherkatalysator (NSC). Die zweite Abgasreinigungsvorrichtung 11 ist bevorzugt ein SCR-Katalysator (Selective-Catalytic-Reduction). Damit der SCR-Katalysator chemisch richtig funktioniert, ist in Strömungsrichtung des Abgases vor diesem eine Eindüsvorrichtung 13 für ein Reduktionsmittel, beispielsweise wässriger Harnstoff (AdBlue ®), in der der Abgasanlage 5 angeordnet. Für die ideale Vermischung von Abgas und dem Reduktionsmittel ist stromab der Eindüsvorrichtung 13 ein Reduktionsmittelmischer 14 in der Abgasanlage 5 vorgesehen.

Bei der dritten Abgasreinigungsvorrichtung 12 handelt es sich bevorzugt ebenfalls um einen SCR-Katalysator und/oder einen Schlupfkatalysator, um Reduktionsmittelreste, die die zweite Abgasreinigungsvorrichtung 11 passieren restlos chemisch umwandeln zu können, bevor die Abgase ins Freie treten.

Eine Betriebstemperatur der Abgasreinigungsanlagen 7, 11, 12 liegt in ungealtertem Zustand über ca. 160° bis 170°C (light-off Temperatur, bei der die Konvertierungsrate der Schadstoffe größer/gleich 50% ist). Die Abgastemperaturen liegen bei einem längeren Schubbetrieb der Brennkraftmaschine 1 teilweise deutlich unter 100°C. Somit ist eine chemische Umsetzung der Schadstoffe im Abgas nicht mehr möglich.

Um das Abkühlen der katalytisch beschichteten Bauteile 7, 11, 12 unter ihre Konvertierungstemperatur zu verhindern, ist der Abgasstrang 5 erfindungsgemäß in Strömungsrichtung des Abgases der Brennkraftmaschine 1 nach der Turbine 3 und vor der ersten Abgasreinigungsvorrichtung 7 von einem Verschlusselement 8 verschließbar und der Abgasstrang 5 vor dem Verschlusselement 8 mit dem Frischluftstrang 6 in Strömungsrichtung der Frischluft vor dem Verdichter 4 über einen Bypass 9 gasführend verbindbar.

In einer bevorzugten Ausführungsform ist in dem Bypass 9 ein Ventil 10 angeordnet. Bei dem Verschlusselement 8 handelt es sich bevorzugt um eine Abgasklappe, auch eine Abgaswalze kann verwendet werden. Das Ventil 10 in dem Bypass 9 ist bevorzugt ein Schubumluftventil.

### Mit anderen Worten ausgedrückt:

Als Abhilfe zu o. g. Problem der Abkühlung katalytischer Bauteile 7, 11, 12 im Abgasstrang 5 wird erfindungsgemäß ein Schubumluftsystem vorgeschlagen, das im Schubbetrieb der Brennkraftmaschine 1 aktiviert wird, d. h. im Schubbetrieb wird das Verschlusselement 8 geschlossen. Wesentlich dabei ist, dass das Abgas (im Wesentlichen kalte Frischluft) im Schubbetrieb über den Abgasturbolader 2, aber auf keinen Fall über die katalytischen Bauteile 7, 11, 12 geführt wird. In weiteren Ausführungsbeispielen kann die Brennkraftmaschine 1 auch mehrere Abgasturbolader 2 aufweisen. Aus diesem Grund muss der Abzweigpunkt für den Bypass 9 nach dem/den Abgasturboladern 2 aber vor den katalytischen Bauteilen 7, 11, 12 sein. Im Falle einer aufgeladenen Dieselbrennkraftmaschine wird stromabwärts des Abgasturboladers 2 aber unbedingt stromaufwärts des ersten Katalysators 7 eine Klappe (Verschlusselement 8) angebracht. Diese Klappe ist im Normalbetrieb der Brennkraftmaschine 1 geöffnet und hindert den Abgasstrom nicht. Im Schubbetrieb der Brennkraftmaschine 1 wird die Klappe geschlossen (wie in Fig. 1 dargestellt) und der Abgasstrom wird durch den Bypass 9 in Richtung Verdichter 4 geleitet und vor dem Verdichter 4 dem Frischluftstrom zugemischt. Für eine korrekte Funktion ist ggf. eine Stauklappe bzw. ein Ventil 10 in dem Bypass 9 zu ergänzen.

Durch die Erfindung werden alle katalytisch beschichteten, abgasführenden Bauteile 7, 11, 12 in Schubphasen der Brennkraftmaschine 1 nicht mehr abgekühlt. Damit bleiben Sie auf Betriebstemperatur und können bestimmungsgemäß Schadstoffe umsetzen. Die heute erforderlichen Heizmaßnahmen können deutlich reduziert werden oder entfallen und die CO₂ Bilanz wird verbessert.

### BEZUGSZEICHENLISTE

- 1.: Brennkraftmaschine
- 2.: Abgasturbolader
- 3.: Turbine
- 4.: Verdichter
- 5.: Abgasstrang
- 6.: Frischluftstrang
- 7.: erste Abgasreinigungsvorrichtung
- 8.: Verschlusselement
- 9.: Bypass
- 10.: Ventil
- 11.: zweite Abgasreinigungsvorrichtung
- 12.: dritte Abgasreinigungsvorrichtung
- 13.: Eindüsvorrichtung
- 14.: Reduktionsmittelmischer
- 15.: Schalldämpfer
- 16.: Abgasstauklappe
- 17.: Ansaugluftaufbereitung
- 18.: Ladeluftkühler
- 19.: Abgasrückführkühler
- 20.: Abgasrückführvorrichtung
- 21.: AGR-Bypass
- 22.: Abgasrückführventil
- 23.: Luftsammler
- 24.: Abgaskrümmer

## Patentansprüche

1. Brennkraftmaschine (1) mit einem Abgasturbolader (2) mit einer Turbine (3) und einem Verdichter (4), wobei die Turbine (3) in einem Abgasstrang (5) und der Verdichter (4) in einem Frischluftstrang (6) angeordnet ist, wobei in dem Abgasstrang (5) nach der Turbine (3) zumindest eine Abgasreinigungsvorrichtung (7) angeordnet ist,
**dadurch gekennzeichnet, dass** der Abgasstrang (5) in Strömungsrichtung eines Abgases der Brennkraftmaschine (1) nach der Turbine (3) und vor einer ersten Abgasreinigungsvorrichtung (7) von einem Verschlusselement (8) verschließbar ist und der Abgasstrang (5) vor dem Verschlusselement (8) mit dem Frischluftstrang (6) in Strömungsrichtung einer Frischluft vor dem Verdichter (4) über einen Bypass (9) Gas führend verbindbar ist.

2. Brennkraftmaschine nach Patentanspruch 1,
**dadurch gekennzeichnet, dass** in dem Bypass (9) ein Ventil (10) angeordnet ist.

3. Brennkraftmaschine nach Patentanspruch 1 oder 2,
**dadurch gekennzeichnet, dass** die erste Abgasreinigungsvorrichtung (7) ein Oxidationskatalysator oder ein Stickoxidspeicherkatalysator ist.

4. Brennkraftmaschine nach einem der Patentansprüche 1 bis 3,
**dadurch gekennzeichnet, dass** stromab der ersten Abgasreinigungsvorrichtung (7) eine zweite Abgasreinigungsvorrichtung (11) in dem Abgasstrang (5) angeordnet ist.

5. Brennkraftmaschine nach Patentanspruch 4,
**dadurch gekennzeichnet, dass** die zweite Abgasreinigungsvorrichtung (11) ein SCR-Katalysator (Selektive Catalytic Reduction) ist.

6. Brennkraftmaschine nach einem der Patentansprüche 1 bis 5,
**dadurch gekennzeichnet, dass** stromab der zweiten Abgasreinigungsvorrichtung (11) eine dritte Abgasreinigungsvorrichtung (12) in dem Abgasstrang (5) angeordnet ist.

7. Brennkraftmaschine nach Patentanspruch 6,
**dadurch gekennzeichnet, dass** die dritte Abgasreinigungsvorrichtung (12) ein SCR-Katalysator (Selektive Catalytic Reduction) und/oder ein SchlupfKatalysator ist.

8. Brennkraftmaschine nach einem der Patentansprüche 4 bis 7,
**dadurch gekennzeichnet, dass** stromab der ersten Abgasreinigungsvorrichtung (7) und stromauf der zweiten Abgasreinigungsvorrichtung (11) eine Eindüsvorrichtung (13) für ein Reduktionsmittel in dem Abgasstrang (5) angeordnet ist.

9. Brennkraftmaschine nach Patentanspruch 8,
**dadurch gekennzeichnet, dass** zwischen der Eindüsvorrichtung (13) und der zweiten Abgasreinigungsvorrichtung (11) ein Reduktionsmittelmischer (14) in dem Abgasstrang (5) angeordnet ist.
